Europäisches Patentamt

European Patent Office

Office européen des brevets

(19)

(11) **EP 0 897 624 B1**

(12) **FASCICULE DE BREVET EUROPEEN**

(45) Date de publication et mention
de la délivrance du brevet:
**28.09.2005 Bulletin 2005/39**

(21) Numéro de dépôt: **98908164.1**

(22) Date de dépôt: **10.02.1998**

(51) Int Cl.⁷: **H04B 10/18**

(86) Numéro de dépôt international:
**PCT/FR1998/000258**

(87) Numéro de publication internationale:
**WO 1998/035459 (13.08.1998 Gazette 1998/32)**

(54) **PROCEDE ET DISPOSITIF DE REGENERATION EN LIGNE D'UN SIGNAL TRANSMIS PAR SOLITONS MULTIPLEXES EN LONGUEUR D'ONDE ET SYSTEME DE TELECOMMUNICATIONS OPTIQUES COMPRENANT UN TEL DISPOSITIF DE REGENERATION**

VERFAHREN UND VORRICHTUNG ZUR ONLINE WIEDERERZEUGUNG EINES DURCH WELLENLÄNGENMULTIPLEXSOLITONS ÜBERTRAGENEN SIGNALS UND OPTISCHES NACHRICHTENÜBERTRAGUNGSSYSTEM MIT EINER DERARTIGEN VORRICHTUNG ZUR WIEDERERZEUGUNG

METHOD AND DEVICE FOR ON-LINE REGENERATION OF A SIGNAL TRANSMITTED BY WAVELENGTH DIVISION MULTIPLEXED SOLITONS AND OPTICAL TELECOMMUNICATION SYSTEM COMPRISING SUCH A REGENERATING DEVICE

(84) Etats contractants désignés:
**DE GB IT SE**

(30) Priorité: **10.02.1997 FR 9701476**

(43) Date de publication de la demande:
**24.02.1999 Bulletin 1999/08**

(73) Titulaire: **ALCATEL
75008 Paris (FR)**

(72) Inventeurs:
• **DESURVIRE, Emmanuel
F-91680 Bruyère le Chatel (FR)**
• **HAMAIDE, Jean-Pierre
F-91180 Saint-Germain-les-Arpajon (FR)**

(74) Mandataire: **Lamoureux, Bernard et al
COMPAGNIE FINANCIERE ALCATEL
Département Propriété Industrielle
54, rue La Boétie
75008 Paris (FR)**

(56) Documents cités:
**EP-A- 0 576 208**

• **PATENT ABSTRACTS OF JAPAN vol. 097, no. 003, 31 mars 1997 & JP 08 286218 A (NIPPON TELEGR & AMP; TELEPH CORP & LT; NTT & GT), 1 novembre 1996,**
• **NAKAZAWA M ET AL: "40GBIT/S WDM (10GBIT/S X 4 UNEQUALLY SPACED CHANNELS) SOLITON TRANSMISSION OVER 10000KM USING SYNCHRONOUS MODULATION AND NARROW BAND OPTICAL FILTERING" ELECTRONICS LETTERS, vol. 32, no. 9, 25 avril 1996, pages 828-830, XP000595674**
• **NAKAZAWA M: "10 GBIT/S SOLITON DATA TRANSMISSION OVER ONE MILLION KILOMETRES" ELECTRONICS LETTERS, vol. 27, no. 14, 4 juillet 1991, pages 1270-1272, XP000240658 cité dans la demande**
• **LECLERC O ET AL: "ASSESSMENT OF 80GBIT/S (4X20GBIT/S) REGENERATED WDM SOLITON TRANSOCEANIC TRANSMISSION" ELECTRONICS LETTERS, vol. 32, no. 12, 6 juin 1996, page 1118/1119 XP000620711**

**Description**

L'invention concerne le domaine de télécommunications sur fibre optique, et plus particulièrement des télécommunications sur des longues distances. Il est connu, pour des liaisons très longues distances à fibre optique, tel que des liaisons transocéaniques, d'utiliser un signal de type dit "soliton" ayant des propriétés spectrales particulières qui permettent au signal de se propager sur la fibre dispersive sans dispersion chromatique appréciable, c'est-à-dire que l'on utilise la dépendance de l'indice de réfraction sur l'intensité du signal pour contrebalancer la dispersion chromatique ou vice-versa. La forme spectrale du signal est préservée malgré les effets de la distance de propagation, qui se résument ainsi principalement à des pertes de ligne. Ces pertes de ligne peuvent être compensées par une amplification optique en ligne, par exemple à l'aide d'un amplificateur à fibre dopée Erbium, ou "EDFA" en anglais.

Pour la transmission par solitons avec amplification en ligne (EDFA) les problèmes qui restent à résoudre sont connus :

1) la gigue Gordon-Haus qui cause une incertitude temporelle de l'arrivée des bits du signal ;

2) l'accumulation de bruit provenant de l'amplification de l'émission spontanée dans les amplificateurs optiques.

Une solution à ce problème est avancée dans EP-A-576 208. Selon ce document, l'insertion d'une pluralité de filtres dont la fréquence centrale varie le long d'une liaison de transmission de signaux de type soliton, permet l'amplification périodique des solitons sans l'amplification exponentielle du bruit d'émission spontanée. Il n'y a pas de régénération des solitons dans ce système. Selon ce document, un avantage d'un tel système est sa compatibilité avec des transmissions multi-longueur d'ondes (WDM en anglais).

La modulation synchrone pour la régénération de solitons en ligne est décrite dans le document Elect. Lett., $\underline{27}$(14), p. 1270-72, 4 July 1991, Nakazawa et al. : "10 Gbit/s Soliton Data Transmission over One Million Kilometres".

Ce document enseigne l'utilisation d'un modulateur optique en $LiNO_3$ pour effectuer la modulation synchrone des solitons, avec un signal d'horloge engendré à partir de la même horloge que celle utilisée pour la source de solitons. La simulation d'une liaison très longue distance a été faite sur une boucle de fibre de 500 km, avec un amplificateur optique à fibre dopée Erbium tous les 50 km et une régénération à chaque tour de la boucle. A cause de la dispersion de la fibre de transmission soliton, qui varie entre -0.7 à -2.2 ps/km/nm, avec une moyenne de -1.5 ps/km/nm, le temps de trajet pour faire un tour de la boucle dépend de la longueur d'onde du soliton. Pour cette raison, un tel système est incompatible avec une transmission WDM, comme souligné dans le document EP-A-0 576 208 évoqué plus haut (cf. page 2, lignes 21-24.).

D'autres documents de l'état de la technique se rapportent aux liaisons optiques de type WDM.

Par exemple, le document Journal of Lightwave Tech., $\underline{9}$(3), pp. 362-367, March 1991, L.F. Mollenauer et al. : "Wavelength Division Multiplexing with Solitons in Ultra-Long Distance Transmission Using Lumped Amplifiers" propose un système de transmission de solitons WDM avec amplification optique périodique, pour des distances transocéaniques (9000 km). L'enseignement de ce document concerne principalement les collisions entre des solitons ayant des longueurs d'onde différentes. Ce document donne des valeurs typiques de différents paramètres pour une telle liaison afin de limiter la gigue de Gordon-Haus introduite par interaction entre les canaux adjacents. Toutefois, dans tous les cas considérés dans ce document, la synchronicité de l'arrivée des solitons à la fin de la liaison n'est ni prévue, ni requise.

Les différents aspects de la gestion des dispersions dans des systèmes WDM non régénérés est également considéré dans le document Proc. Int'l. Symposium on physics and applications of Optical Solitons in fibers, Kyoto, Japan, pp. 1-12, Nov. 14-17, 1995, S. Kumar et al. : "Dispersion managements on soliton transmission in fibers with lumped amplifiers" (cf. dernier chapitre de ce document).

Ainsi, à la lecture des documents de l'art antérieur, on constate que liaisons optiques à plusieurs canaux multiplexés en longueur d'onde (WDM) ne permettent pas une régénération des solitons puisqu'il n'y a pas de synchronicité entre les canaux. La question de la régénération synchrone est donc, dans cette optique, sans objet.

Pour cette raison, il n'apparaît pas possible, d'après les préjugés bien établis de l'homme de l'art, d'envisager des liaisons optiques WDM très haut débit, très longues distances, via solitons multiplexés en longueur d'onde et avec régénération pour éliminer la gigue Gordon-Haus et pour garder la forme spectrale optimale des solitons.

Dans le document PAJ vol. 097 no. 003, 31 mars 1997 l'ensemble des canaux sont resynchronisés entre eux en entrée du modulateur.

L'invention a pour but de pallier les inconvénients de l'art antérieur.

A cette fin, l'invention a pour objet un dispositif de régénération d'un signal optique ayant la forme d'un train de bits représentés par des solitons définis notamment par une longueur d'onde de propagation et un rythme de bits ledit dispositif comprenant un circuit de récupération d'horloge pour extraire un signal d'horloge dudit signal optique, un modulateur optique pour régénérer lesdits solitons et un filtre spectral et étant caractérisé en ce qu'il comporte en amont du modulateur un moyen de synchronisation pour des solitons émis sur n (n>1) canaux ayant des longueurs d'onde respectives différentes, lesdits canaux et lesdites longueurs d'onde différentes étant associés à des temps de groupe différents, ledit moyen de synchronisation comportant m (l≤m<n) lignes à retard optiques, le retard $\tau_i$ (l≤i≤m) pour la ligne i étant choisi de manière à compenser les différences entre les temps de groupe associés aux différents canaux.

Selon un mode de réalisation avantageux, le moyen de synchronisation comporte m lignes à retard optiques, avec m<n, le retard $\tau_i$ (1≤i<m) pour le canal i étant choisi de manière à compenser les différences de temps de groupe entre m canaux, et au moins une ligne sans retard optique pour les n-m autres canaux.

En particulier, le moyen de synchronisation peut comprendre une seule ligne sans retard optique, ladite ligne sans retard optique étant conçue pour recevoir des solitons multiplexés émis par une pluralité de canaux.

Selon un premier mode de réalisation, actuellement préféré, le moyen de synchronisation comprend une ligne optique équipée d'une pluralité de filtres photoréfractifs en série, la fréquence de chaque filtre étant associée à celle d'un canal et la position respective de chaque filtre i (l≤i≤m) étant choisie de manière à produire ledit retard $\tau_i$ pour les solitons émis sur le canal i; et un moyen de contrôle pour émettre vers ladite ligne optique les solitons reçus par le moyen de synchronisation et vers un port de sortie du moyen de synchronisation les solitons réfléchis par les filtres de ladite ligne optique; et un coupleur optique pour transmettre les solitons émis sur les canaux qui ne sont pas associés à un filtre vers le port de sortie du moyen de synchronisation. Dans ce mode de réalisation, le moyen de contrôle est avantageusement un circulateur optique à trois ports.

Selon un deuxième mode de réalisation de l'invention, le moyen de synchronisation comprend un démultiplexeur; un ensemble de m lignes en parallèle comportant chacune un tronçon de ligne à retard optique; un multiplexeur; au moins une ligne sans retard optique disposée entre le démultiplexeur et le multiplexeur.

Selon un troisième mode de réalisation de l'invention, le moyen de synchronisation comprend un diviseur; un ensemble de m lignes en parallèle comportant chacune un filtre pour sélectionner un canal et un tronçon de ligne à retard optique; un concentrateur; et au moins une ligne sans retard optique entre le diviseur et le concentrateur, ladite ligne sans retard comprenant un filtre pour sélectionner au moins un canal.

L'invention a également pour objet un système de transmission optique de signaux ayant chacun la forme d'un train de bits représentés par des solitons, qui sont définis notamment par une longueur d'onde de propagation et un rythme de bits, ledit système de transmission comprenant au moins un émetteur et un récepteur reliés par une fibre optique, ledit système comprenant au moins un dispositif de régénération optique selon l'invention.

Avantageusement, dans le cas d'un tel système de transmission optique, chaque dispositif de régénération est placé à une distance $Z_R$, après ledit émetteur ou le dispositif de régénération qui le précède, choisie telle que son produit avec la différence de temps d'arrivée $\delta\tau_g = \tau_g(\lambda_1) - \tau_g(\lambda_\ell)$ satisfasse la condition

$$\left[kT - \frac{T}{a}\right] < \delta\tau_g \, Z_R < \left[kT + \frac{T}{a}\right]$$

où k est entier, $a \geq 4$, T est le temps bit (pour $Z_R$ en km, $dt_g$ en ps.km$^{-1}$), et $\lambda_1$ et $\lambda_\ell$ sont les extrémités de la bande spectrale définie par ledit sous-ensemble de n-m canaux.

De manière particulièrement avantageuse, le circuit de récupération d'horloge extrait du signal optique un signal de longueur d'onde $\lambda_k$ comprise entre les longueurs d'onde $\lambda_1$ et $\lambda_\ell$; tel que $\tau_g(\lambda_k).Z_R = kT$.

Les caractéristiques et avantages de l'invention ressortiront mieux de la description, qui va suivre, de modes de réalisation donnés à titre illustratif, mais non limitatif, en référence aux dessins annexés, sur lesquels :

- la figure 1 illustre schématiquement un système de transmission optique sur fibre optique selon l'invention,
- la figure 2 montre schématiquement un dispositif de régénération selon l'invention,
- la figure 3 illustre un premier mode de réalisation du moyen de synchronisation selon l'invention, conçu pour resynchroniser les solitons émis par les n canaux d'une liaison WDM à n canaux
- la figure 4 illustre un deuxième mode de réalisation du moyen de synchronisation selon l'invention, conçu pour resynchroniser les solitons émis par les n canaux d'une liaison WDM à n canaux, et
- la figure 5 illustre un troisième mode de réalisation du moyen de synchronisation selon l'invention, conçu pour resynchroniser les solitons émis par les n canaux d'une liaison WDM à n canaux.

Sur toutes les figures, les mêmes références numériques se réfèrent aux mêmes éléments, et l'échelle n'est pas toujours respectée pour des raisons de clarté.

Une solution pour résoudre le problème de la synchronicité de solitons émis sur différents canaux est décrite dans la demande de brevet français n°9600732 déposée le 23/01/1996 au nom de Alcatel Submarine Networks et intitulée "Méthode et dispositif de régénération en ligne d'un signal transmis par solitons multiplexés en longueur d'onde via la modulation synchrone et système de télécommunications optiques utilisant la méthode".

On résume ci-après le principe de synchronisation développé dans cette demande de brevet antérieure, dans la mesure nécessaire à la compréhension de la présence invnetion. Le lecteur est invité à se référer à cette demande de brevet antérieure pour de plus amples détails.

Dans cette demande de brevet antérieure, il est proposé de tenir compte de la longueur du chemin optique parcouru par les solitons en fonction de leurs longueurs d'onde, de manière à ce que les solitons soit synchronisés, au moins approximativement, à l'endroit même où est positionné le modulateur.

En effet, il est remarqué que les signaux de solitons émis sur les différents canaux, bien que désynchronisés par la dispersion chromatique lors de leur propagation sur la fibre optique, comportent tous des signaux périodiques, avec des rythmes bit identiques à l'émission. Il en résulte des "collisions" entre des solitons de canaux voisins le long de la ligne de transmission (voir description théorique dans l'article de Mollenauer et al. déjà cité). De ce fait, et tenant compte des décalages fréquentiels entre les différents canaux, tous les canaux se retrouveront synchronisés entre eux à certains points espacés régulièrement le long de la ligne. Il est alors proposé de calculer cet espacement et de placer les régénérateurs à l'un de ces points de synchronisation, afin d'effectuer la modulation synchrone avec un seul modulateur et sans démultiplexage.

Par exemple, pour deux canaux transmis à $\lambda_1$ et $\lambda_2$, avec $\lambda_0$ la longueur d'onde de dispersion nulle, et DI = $\lambda_2 - \lambda_1$, la différence de temps d'arrivée au modulateur résulte de la différence de temps de groupe $\delta\tau_g = \tau_g(\lambda_2) - \tau_g(\lambda_1)$,

$$\delta\tau_g = \frac{1}{2}\left(\frac{dD}{d\lambda}\right)_{\lambda_0}\left\{(\lambda_2-\lambda_0)^2 - (\lambda_1-\lambda_0)^2\right\} = \frac{1}{2}\left(\frac{dD}{d\lambda}\right)_{\lambda_0}\left\{\Delta\lambda^2 + 2\Delta\lambda(\lambda_1-\lambda_0)\right\} \ (ps.km^{-1})$$

dans le cas où la pente $(dD/d\lambda)_{\lambda_0}$ est non nulle, et dans le cas contraire $\delta\tau_g = D.(\lambda_2 - \lambda_1)$.

La méthode proposée consiste ainsi à utiliser un seul modulateur synchrone pour tous les canaux WDM, en choisissant soigneusement la distance entre l'émetteur et le premier modulateur, ou entre modulateurs successifs, par rapport a l'espacement des canaux et la dispersion chromatique de la fibre, afin de retrouver tous les canaux synchronisés lors du passage dans chaque modulateur. En pratique, la distance $Z_R$ entre modulateurs sera choisie telle que la différence de temps de groupe $\delta\tau_g$ satisfasse la condition

$$\left[kT - T/a\right] < \delta\tau_g \ Z_R < \left[kT + T/a\right]$$

où k est entier, $a \geq 4$, et T est le temps bit (pour $Z_R$ en km, $dt_g$ en ps.km$^{-1}$). Cette contrainte permet d'obtenir une synchronisation approximative entre les deux canaux WDM ayant les longueurs d'onde $\lambda_1$ et $\lambda_2$. Une synchronisation meilleure peut être obtenue en réduisant la largeur de la fenêtre temporelle (c'est-à-dire en augmentant a), jusqu'à obtenir le degré de synchronisation voulue.

La technique proposée dans cette demande de brevet antérieure est mise en oeuvre dans le cadre de la présente invention. Plus précisément, dans le cas d'un système de transmission à n canaux WDM, on prévoit de placer un modulateur à l'endroit ou un sous-ensemble de n-m (m<n) canaux sont naturellement synchronisés, selon la technique décrite dans la demande de brevet antérieure, et de synchroniser les m canaux restants sur ce sous-ensemble de canaux.

Cette combinaison de deux techniques de synchronisation présente des avantages évidents : la contrainte sur la position du modulateur est moins forte que dans le cas de la demande de brevet antérieure puisqu'il n'est plus requis que tous les canaux soient naturellement synchronisés (lorsque le nombre de canaux WDM augmente, la distance $Z_R$ entre les deux points successifs où tous les canaux sont naturellement synchronisés augmente; par suite l'atténuation, la dispersion, etc ... des signaux augmentent) et le moyen de synchronisation est plus simple puisqu'il ne doit traiter qu'une partie des canaux.

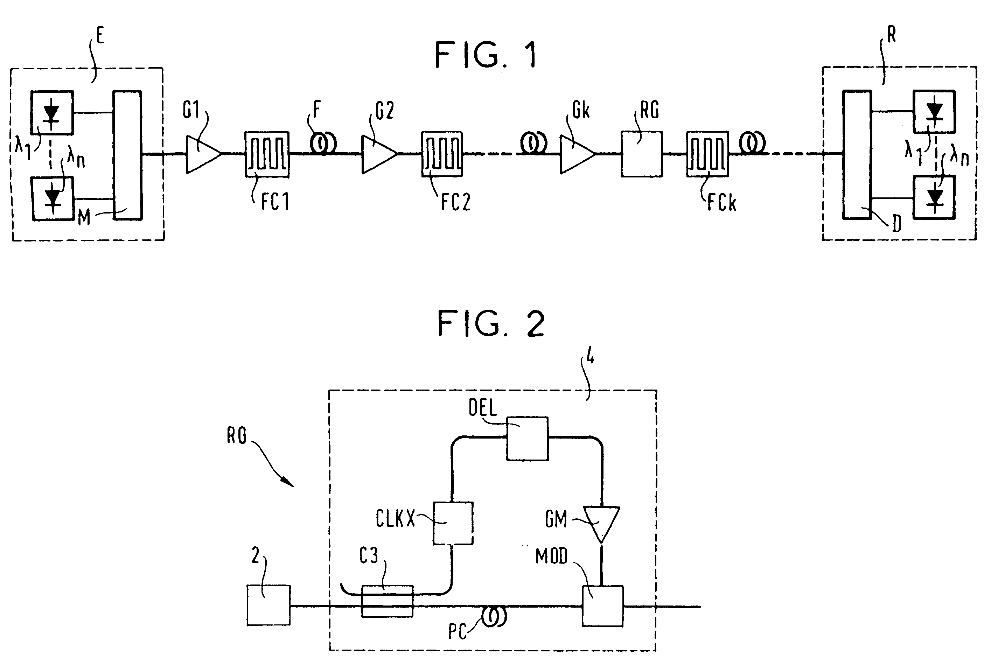

La figure 1 montre schématiquement un exemple d'un système de transmissions optiques sur fibre optique apte à transmettre et régénérer un signal optique WDM formé de solitons. Ce système comprend une fibre optique F, un émetteur optique E, au moins un dispositif de régénération RG, une pluralité d'amplificateurs optiques de ligne G1, G2 ... Gk ..., une pluralité de filtres cannelés FC1, FC2 ... FCk ..., et un récepteur optique R. L'émetteur optique E comprend une pluralité de sources optiques aptes à émettre des solitons ayant des fréquences respectives $\lambda1$, $\lambda2$, ... $\lambda n$ et un multiplexeur M pour introduire lesdits solitons sur la fibre optique F. De manière symétrique, le récepteur comprend un démultiplexeur D et une pluralité de détecteurs optiques aptes à recevoir respectivement les solitons ayant des fréquences λ1, λ2, ... λn. Les amplificateurs optiques sont répartis, de préférence de manière régulière, le long de la ligne pour compenser les atténuations subies par les solitons. Ces amplificateurs optiques peuvent, de façon classique, être de type EDFA (pour Erbium Doped Fibre Amplifier). Les filtres cannelés FC1, FC2 ... FCk ... sont disposés en aval des amplificateurs optiques G1, G2, ...;ils réduisent la largeur temporelle des solitons et, par là même la gigue temporelle. Par filtre cannelé, on entend un filtre passe-bande qui laisse passer une pluralité des bandes étroites ayant des fréquences centrales différentes, correspondant aux longueurs d'ondes des différents canaux du système WDM multiplexé en longueur d'onde.

Un système de transmission optique tel que représenté sur la figure 1, mais dépourvu de dispositifs de régénération en ligne, fait partie de l'état de la technique; cf. l'article de L.F. Mollenauer et al. cité plus haut.

La présente invention tient précisément dans le fait de régénérer en ligne un signal optique de type soliton WDM. La figure 2 illustre schématiquement un dispositif de régénération selon l'invention.

Ce dispositif de régénération RG comprend un moyen de synchronisation 2 et un modulateur 4. Le modulateur 4 est un modulateur connu, et utilisé pour régénérer un signal de type soliton à fréquence unique, c'est-à-dire non-WDM. Un tel modulateur est décrit notamment dans l'article de Nakazawa et al. cité plus haut. Il comprend un modulateur optique MOD, par exemple de type LiNO$_3$, pour effectuer la modulation synchrone des solitons, qui est commandé par un signal électronique de commande produit par un circuit d'horloge à partir du signal de solitons en ligne. Les moyens de récupération d'horloge comprennent un coupleur optique C3 pour l'extraction d'une partie du signal optique, un circuit d'extraction d'horloge CLKX, une ligne à retard pour fournir un délai DEL, et un amplificateur GM pour fournir la puissance de commande nécessaire pour faire fonctionner le modulateur MOD en LiNO$_3$.

Le moyen de modulation peut comprendre des dispositifs de contrôle de polarisation biréfringents PC. De tels dispositifs peuvent également être prévus après les filtres cannelés (figure 1).

Pour permettre la modulation synchrone simultanée d'une pluralité de signaux soliton multiplexés en longueur d'onde, donc ayant des longueurs d'onde différentes, des vitesses de groupe différentes, et donc des temps de trajet différents, il faut que les solitons émis dans les différents canaux soient synchrones.

Différents modes de réalisation d'un dispositif de régénération conforme à l'invention vont maintenant être décrits.

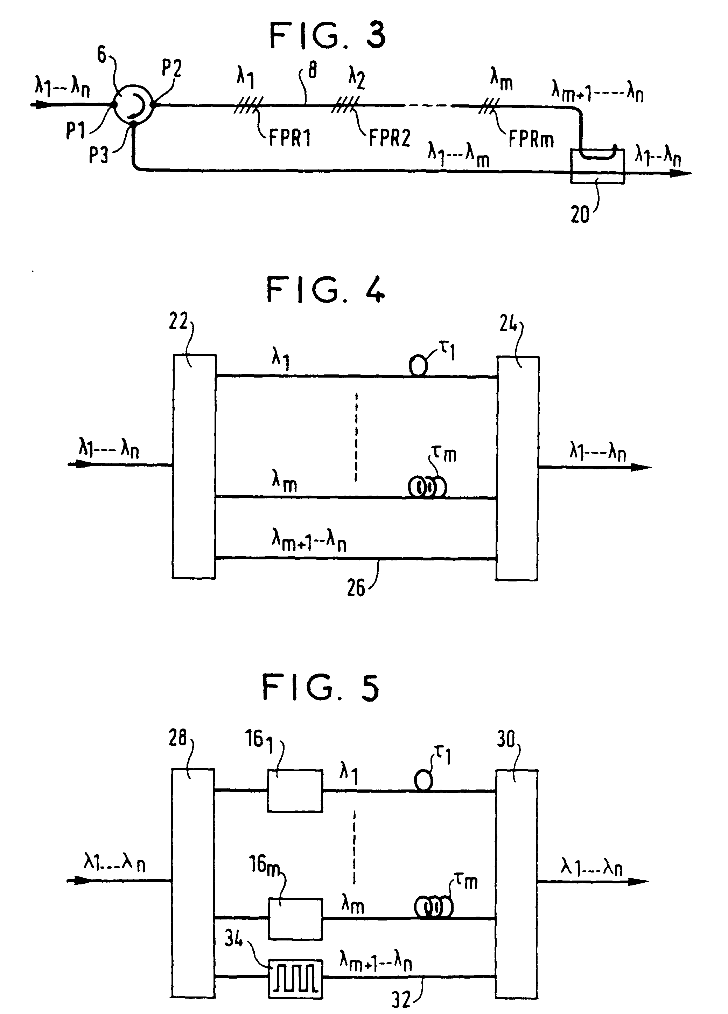

Un moyen de synchronisation actuellement préféré est représenté schématiquement sur la figure 3. Il comprend un circulateur optique 6 à trois ports P1, P2, P3, une ligne optique comportant une fibre optique 8 et m filtres photoréfractifs FPR1, FPR2, ... FPRm réfléchissants respectivement à λ1, λ2, ... λm (m<n), et un coupleur optique 20 destiné à transmettre les solitons émis sur les n-m autres canaux, et qui ne sont pas réfléchis par les filtres photoréfractifs, vers le port de sortie du moyen de synchronisation. Le circulateur optique est conçu pour transmettre un signal reçu sur son port P1 vers son port P2, et un signal reçu sur son port P2 vers son port P3. Les ports P1 et P3 forment respectivement les entrée et sortie du moyen de synchronisation 2. On comprend donc que le signal soliton émis dans le canal de fréquence λi (1≤i≤n) arrive sur le port P1, est transmis vers le port P2, parcourt la fibre 8 jusqu'au filtre FPRi, où il est réfléchi vers le circulateur 6, et est finalement transmis vers le port P3. La position relative des filtres photoréflecteurs est choisie de manière à compenser les retards entre les signaux des canaux 1 à m par rapport aux signaux des canaux m+1 à n, ces derniers étant naturellement synchronisés (le modulateur est placé à l'endroit où ces canaux sont synchrones). Ce retard peut être déterminé de la manière suivante.

Pour chaque canal (longueur d'onde λ), le temps de groupe (par km) est donné par la relation :

$$\tau_g(\lambda) = \tau_g(\lambda_0) + \frac{1}{2}\left(\frac{dD}{d\lambda}\right)_{\lambda_0} (\lambda - \lambda_0)^2$$

où D est la dispersion moyenne de la fibre de transmission et λ$_0$ la longueur d'onde de dispersion nulle. A l'entrée du régénérateur, la différence des temps de groupe δτ$_{k1}$=τ$_g$(λ$_k$) - τ$_g$(λ$_n$) entre le canal "n" pris comme référence et le canal "k" est donc donnée par :

$$\delta\tau_{k1} = \tau_g(\lambda_k) - \tau_g(\lambda_n) = \frac{1}{2}\left(\frac{dD}{d\lambda}\right)_{\lambda_0}\left\{(\lambda_k - \lambda_0)^2 - (\lambda_n - \lambda_0)^2\right\} = \frac{1}{2}\left(\frac{dD}{d\lambda}\right)_{\lambda_0}\left\{\Delta\lambda_{k1}^2 + 2\Delta\lambda_{k1}(\lambda_n - \lambda_0)\right\}$$

avec Δλ$_{k1}$=λ$_k$-λ$_n$.

Les deux relations précédentes concernent le cas où la pente de dispersion (dD/dλ)$_{\lambda_0}$ est non nulle. Il est possible, voire avantageux, cependant, de réaliser un système où la pente de dispersion est périodiquement corrigée (compensée) par insertion de courts tronçons de fibre de caractéristiques opposées, ou bien de réaliser une fibre de transmission à pente nulle ou aplatie. Que le système soit à pente de dispersion compensée ou effectivement nulle, le temps de groupe (par km) est alors donné par la relation :

$$\tau_g(\lambda) = \tau_g(\lambda_n) + D(\lambda - \lambda_n)$$

où D est la dispersion (constante) dans l'intervalle spectral $\{\lambda_n \ldots \lambda\}$. La différence de temps de groupe $\delta\tau_{k1} = \tau_g(\lambda_k) - \tau_g(\lambda_n)$ est donnée par la relation $\delta\tau_{k1} = D.\Delta\lambda_{k1}$

Si $T_{bit}$ représente le temps bit (ou la période de modulation synchrone), on peut définir un nombre $N_{k1}$ (pour k=1 ... n) comme étant le nombre entier vérifiant la relation pour le canal k : $N_{k1} T_{bit} \leq \delta\tau \leq (N_{k1}+1) T_{bit}$, soit $N_{k1} = E$ ($\delta\tau_{k1}/T_{bit}$) où E (x) représente la partie entière de l'argument x. L'entier $N_{k1}$ représente le nombre de temps bit maximum inclut dans le retard entre le canal n et le canal k. En fait, la quantité qui importe n'est pas le retard accumulé entre deux bits individuels appartenant aux canaux n et k, mais plutôt le retard relatif entre les fenêtres temporelles correspondantes. L'avance de la fenêtre k sur la fenêtre n est ainsi donnée par $\Delta\tau_{k1}$(avance) = $\delta\tau_{k1} - N_{k1} T_{bit}$ et le retard de la fenêtre k sur la fenêtre n par :

$$\Delta\tau_{k1}(retard) = T_{bit} - \Delta\tau_{k1}(avance) = (N_{k1}+1).T_{bit} - \delta\tau_{k1} = \left\{1 - \left[\frac{\delta\tau_{k1}}{T_{bit}} - E\left(\frac{\delta\tau_{k1}}{T_{bit}}\right)\right]\right\}$$

Notons que pour des considérations pratiques, on peut rajouter à ce retard une quantité supplémentaire égale à un nombre entier de temps bit $T_{bit}$. Quand le retard est introduit dans chaque canal, tous les signaux se retrouvent synchrones en entrée du modulateur.

Les filtres photoréfractifs sont avantageusement réalisés sous forme de filtres de BRAGG photoinscrits directement sur la fibre. Ils offrent l'avantage d'un taux d'extinction élevé et permettent de définir de manière très précise le retard de chaque canal.

Un autre mode de réalisation du moyen de synchronisation est représenté sur la figure 4. Il comprend un démultiplexeur 22 à une entrée et m+1 sorties, un ensemble de m+1 lignes en parallèle, et un multiplexeur 24 à m+1 entrées et une sortie. Parmi l'ensemble de lignes en parallèle, une ligne 26 associée à tous les canaux naturellement synchronisés ne comporte pas de ligne à retard optique, et les m autres lignes sont associées chacune à l'un des autres canaux et comportent chacune une ligne à retard optique $\tau_i$ (1≤i≤m) introduit un retard optique tel que l'ensemble des n canaux soient synchronisés en sortie du moyen de synchronisation.

Une autre variante de réalisation du moyen de synchronisation est représenté sur la figure 5. Il comprend un répartiteur 28 à une entrée et m+1 sorties, un ensemble de m+1 lignes en parallèle, et un concentrateur 30 à m+1 entrées et une sortie. Parmi l'ensemble de lignes en parallèle, une ligne 32 est associée à tous les canaux naturellement synchronisés et comporte un filtre cannelé 34 correpondant à ces canaux, et un ensemble de m lignes qui sont chacune associées à un canal et qui comportent chacune une ligne à retard optique tel que l'ensemble des n canaux soient synchronisés en sortie du moyen de synchronisation. Ainsi le filtre 16i (1≤i≤m) de la ligne i et le retard τi introduit par la portion de ligne à retard de la ligne i sont choisis respectivement pour laisser paseer les solitons émis sur le canal i et pour retarder lesdits solitons d'un retard $\tau_i$ tel que les solitons transmis sur la ligne i soient synchrones en sortie du concentrateur avec les solitons transmis sur la ligne 32.

Le moyen de synchronisation représenté sur la figure 5 présente une meilleure extinction des canaux adjacents, par rapport au moyen de réalisation représenté sur la figure 4, mais ceci au prix d'une perte d'insertion augmentant en $n^2$. Cette perte d'insertion reste cependant raisonnable, lorsque le nombre n de canaux est petit. Dans le cas d'une transmission à multiplexage en fréquence sur n=2 ou 3 canaux, le mode de réalisation de la figure 5 est actuellement préféré au mode de réalisation de la figure 4.

D'autres moyens de synchronisation que ceux décrits en référence aux figures 3 à 5 sont connus et peuvent être utilisés dans le cadre de la présente invention. Par exemple, un retard sélectif par canal peut être obtenu en utilisant une fibre optique à compensation de dispersion ou une fibre optique comportant un filtre photoréfractif chirpé (le terme "chirpé", bien connu de l'homme du métier, dérive du terme anglo-saxon "chirp" utilisé pour désigner un milieu de transmission dans lequel les basses fréquences se propagent plus vite que les hautes fréquences).

En ce qui concerne le coupleur optique utilisé pour récupérer le signal d'horloge, il convient de noter qu'il peut être placé sur la ligne de transmission, comme représenté sur la figure 2, mais qu'il pourrait aussi être placé sur la fibre optique 8 (figure 3), ou sur l'une des m+1 lignes parallèles (figure 4) ou (figure 5), ou en un autre point du moyen de synchronisation.

L'invention n'est pas limitée aux modes de réalisation représentés, mais englobe au contraire les moyens équivalents à ceux décrits et tous les modes de réalisation qui sont conformes aux revendications annexées.

**Revendications**

1. Dispositif de régénération d'un signal optique ayant la forme d'un train de bits représentés par des solitons définis notamment par une longueur d'onde de propagation et un rythme de bits, ledit dispositif comprenant un circuit de récupération d'horloge (C3, CLKX) pour extraire un signal d'horloge dudit signal optique et un modulateur optique (MOD) pour régénérer lesdits solitons, et étant **caractérisé en ce qu'**il comporte en amont du modulateur un moyen de synchronisation (2) pour des solitons émis sur n (n>1) canaux ayant des longueurs d'onde respectives différentes, lesdits canaux et lesdites longueurs d'onde différentes étant associés à des temps de groupe différents, ledit moyen de synchronisation comportant m (l≤m<n) lignes à retard optiques, le retard $\tau_i$ (1≤i≤m) pour la ligne i étant choisi de manière à compenser les différences entre les temps de groupe associés aux différents canaux.

2. Dispositif selon la revendication 1 **caractérisé en ce que** le moyen de synchronisation comporte m lignes à retard optiques, avec m<n, le retard $\tau_i$ (l≤i<m) pour le canal i étant choisi de manière à compenser les différences de temps de groupe entre m canaux, et au moins une ligne sans retard optique pour les n-m autres canaux.

3. Dispositif selon la revendication 2 **caractérisé en ce que** le moyen de synchronisation comprend une seule ligne sans retard optique (26,;32), ladite ligne sans retard optique étant conçue pour recevoir des solitons multiplexés émis par une pluralité de canaux.

4. Dispositif selon l'une des revendications 1 à 2 **caractérisé en ce que** le moyen de synchronisation comprend une ligne optique (8) équipée de m filtres photoréfractifs en série (FPR1, FPR2, ...FPRm), la fréquence de chaque filtre étant associée à celle d'un canal et la position respective de chaque filtre i (1≤i≤m) étant choisie de manière à produire ledit retard $\tau i$ pour les solitons émis sur le canal i; un moyen de contrôle (6) pour émettre vers ladite ligne optique les solitons reçus par le moyen de synchronisation et vers un port de sortie du moyen de synchronisation les solitons réfléchis par les filtres de ladite ligne optique; et un coupleur optique (20) pour transmettre les solitons émis sur les n-m canaux qui ne sont pas associés à un filtre vers le port de sortie du moyen de synchronisation.

5. Dispositif selon la revendication 4 **caractérisé en ce que** ledit moyen de contrôle (6) est un circulateur optique à trois ports.

6. Dispositif selon l'une des revendications 1 ou 2, **caractérisé en ce que** le moyen de synchronisation comprend un démultiplexeur (22), un ensemble de m lignes en parallèle comportant chacune un tronçon de ligne à retard optique, un multiplexeur (24), et au moins une ligne sans retard optique (26) disposée entre le démultiplexeur et le multiplexeur.

7. Dispositif selon l'une des revendications 1 ou 2 **caractérisé en ce que** le moyen de synchronisation comprend un diviseur (28); un ensemble de m lignes en parallèle comportant chacune un filtre ($16_1$, ...$16_m$) pour sélectionner un canal et un tronçon de ligne à retard optique; un concentrateur (30); et au moins une ligne sans retard optique (32) entre le diviseur (28) et le concentrateur (30), ladite ligne sans retard comprenant un filtre (34) pour sélectionner au moins un canal.

8. Dispositif selon l'une des revendications 1 à 7 **caractérisé en ce qu'**il comprend un filtre cannelé (Fck) en sortie du modulateur synchrone (MOD).

9. Système de transmission optique de signaux ayant chacun la forme d'un train de bits représentés par des solitons, qui sont définis notamment par une longueur d'onde de propagation et un rythme de bits, ledit système de transmission comprenant au moins un émetteur (E) et un récepteur (R) reliés par une fibre optique (F), ledit système étant **caractérisé en ce qu'**il comprend au moins un dispositif de régénération optique selon l'une des revendications 1 à 8.

10. Système selon la revendication 9 **caractérisé en ce que** chaque dispositif de régénération est disposé à une distance $Z_R$, après ledit émetteur ou le dispositif de régénération qui le précède, choisie telle que son produit avec la différence de temps d'arrivée $\delta\tau_g = \tau_g(\lambda_1) - \tau_g(\lambda_\ell)$ satisfasse la condition

$$\left[kT - T/a\right] < \delta\tau_g\ Z_R < \left[kT + T/a\right]$$

où k est entier, a≥4, T est le temps bit (pour $Z_R$ en km, $dt_g$ en ps.km$^{-1}$), et $\lambda_1$ et $\lambda_\ell$ sont les extrémités de la bande spectrale définie par ledit sous-ensemble de n-m canaux.

11. Système selon la revendication 10 **caractérisé par** un circuit de récupération d'horloge qui extrait du signal optique un signal de longueur d'onde $\lambda_k$ comprise entre les longueurs d'onde $\lambda_1$ et $\lambda_\ell$ ; tel que $\tau_g(\lambda_k).Z_R = kT$.

**Patentansprüche**

1. Vorrichtung zur Wiedererzeugung eines optischen Signals in Form einer durch Solitons dargestellten Bitfolge, die insbesondere durch eine Ausbreitungswellenlänge und einen Bittakt definiert werden, wobei die genannte Vorrichtung eine Schaltung zur Wiedererzeugung des Taktgebers (C3, CLKX) umfasst, um das Taktgebersignal des genannten optischen Signals auszulesen, und einen optischen Modulator (MOD), um die genannten Solitons wiederzuerzeugen, und **dadurch gekennzeichnet ist, dass** sie vor dem Modulator eine Synchronisierungsvorrichtung (2) für Solitons umfasst, die über n (n>1) Kanäle mit unterschiedlichen Wellenlängen übertragen werden, wobei die genannten Kanäle und die genannten unterschiedlichen Wellenlängen unterschiedlichen Gruppenlaufzeiten zugeordnet sind, wobei die genannte Synchronisierungsvorrichtung m (1≤m<n) Leitungen mit optischer Verzögerung umfasst, wobei die Verzögerung $\tau_i$ (I≤i≤m) für die Leitung i entsprechend gewählt wird, um die Unterschiede zwischen den Gruppenlaufzeiten zu kompensieren, die den unterschiedlichen Kanälen zugeordnet sind.

2. Vorrichtung gemäß Anspruch 1, **dadurch gekennzeichnet, dass** die Synchronisierungsvorrichtung m Leitungen mit optischer Verzögerung mit m<n umfasst, wobei die Verzögerung $\tau_i$ (I≤i<m) für den Kanal i so gewählt wird, dass die Unterschiede der Gruppenlaufzeiten zwischen m Kanälen kompensiert werden, sowie mindestens eine Leitung ohne optische Verzögerung für die anderen n-m Kanäle.

3. Vorrichtung gemäß Anspruch 2, **dadurch gekennzeichnet, dass** die Synchronisierungsvorrichtung eine einzelne Leitung ohne optische Verzögerung (26; 32) umfasst, wobei die genannte Leitung ohne optische Verzögerung entsprechend konzipiert ist, um die von der Vielzahl an Kanälen übertragenen Multiplexsolitons zu empfangen.

4. Vorrichtung gemäß einem der Ansprüche 1 bis 2, **dadurch gekennzeichnet, dass** die Synchronisierungsvorrichtung eine optische Leitung (8) umfasst, die mit Lichtbrechungsfiltern in Serie (FPR1, FPR2, ... FPRm) ausgestattet ist, wobei die Frequenz jedes Filters der eines Kanals zugeordnet ist und die jeweilige Position jedes Filters i (I≤i≤m) so gewählt wird, dass die genannte Verzögerung $\tau i$ für die über den Kanal i übertragenen Solitons erzeugt wird; und eine Kontrollvorrichtung (6), um die Solitons, die von der Synchronisierungsvorrichtung empfangen werden, an die genannte optische Leitung zu übertragen und die Solitons, die von den Filtern der genannten optischen Leitung zurückgestrahlt werden, an den Ausgangsanschluss der Synchronisierungsvorrichtung zu übertragen; und einen optischen Koppler (20), um die Solitons, die über die n-m Kanäle, die keinem Filter zugeordnet sind, an den Ausgangsanschluss der Synchronisierungsvorrichtung zu übertragen.

5. Vorrichtung gemäß Anspruch 4, **dadurch gekennzeichnet, dass** es sich bei der genannten Kontrollvorrichtung (6) um einen optischen Zirkulator mit drei Anschlüssen handelt.

6. Vorrichtung gemäß einem der Ansprüche 1 oder 2, **dadurch gekennzeichnet, dass** die Synchronisierungsvorrichtung einen Demultiplexer (22), eine Einheit aus m parallelen Leitungen, die jeweils einen Leitungsabschnitt mit optischer Verzögerung umfassen, einen Multiplexer (24) und mindestens eine Leitung ohne optische Verzögerung (26), die zwischen dem Demultiplexer und dem Multiplexer angeordnet ist, umfasst.

7. Vorrichtung gemäß einem der Ansprüche 1 oder 2, **dadurch gekennzeichnet, dass** die Synchronisierungsvorrichtung einen Teiler (28), eine Einheit aus m parallelen Leitungen, die jeweils einen Filter ($16_1$, ... $16_m$) zur Auswahl eines Kanals und eines Leitungsabschnitts mit optischer Verzögerung umfassen, einen Konzentrator (30) und mindestens eine Leitung ohne optische Verzögerung (32) zwischen dem Teiler (28) und dem Konzentrator (30) umfasst, wobei die genannte Leitung ohne Verzögerung einen Filter (34) zur Auswahl mindestens eines Kanals umfasst.

**8.** Vorrichtung gemäß einem der Ansprüche 1 bis 7, **dadurch gekennzeichnet, dass** sie einen Trennfilter (Fck) am Ausgang des synchronen Modulators (MOD) umfasst.

**9.** Optisches Übertragungssystem für Signale, die jeweils die Form einer Bitfolge aufweisen, die durch Solitons dargestellt werden, die insbesondere durch eine Ausbreitungswellenlänge und einen Bittakt definiert werden, wobei das genannte Übertragungssystem mindestens einen Sender (E) und einen Empfänger (R) umfasst, die über eine optische Faser (F) verbunden sind, wobei das genannte System **dadurch gekennzeichnet ist, dass** es mindestens eine optische Wiedererzeugungsvorrichtung gemäß einem der Ansprüche 1 bis 8 umfasst.

**10.** System gemäß Anspruch 9, **dadurch gekennzeichnet, dass** jede Wiedererzeugungsvorrichtung in einem Abstand $Z_R$ zu dem genannten Sender oder zur vorangehenden Wiederzeugungsvorrichtung angeordnet ist, der so gewählt wird, dass sein Produkt mit der Differenz der Eingangszeit $\delta\tau_g = \tau_g(\lambda_1) - \tau_g(\lambda_1)$ die folgende Bedingung erfüllt:

$$\left[ kT - \frac{T}{a} \right] < \delta\tau_g \, Z_R < \left[ kT + \frac{T}{a} \right]$$

wobei k eine ganze Zahl ist, a≥4, T das Bitintervall (für $Z_R$ in km, $dt_g$ in ps.km$^{-1}$) und $\lambda_1$ und $\lambda_1$ die Enden des Spektralbands sind, die durch das genannte Teilsystem aus n-m Kanälen definiert werden.

**11.** System gemäß Anspruch 10, **gekennzeichnet durch** eine Schaltung zur Wiedererzeugung des Taktgebers, die aus dem optischen Signal ein Signal mit der Wellenlänge $\lambda_k$ ausliest, das zwischen den Wellenlängen $\lambda_1$ und $\lambda_1$ liegt, so dass $\tau_g = \tau_g(\lambda_k) \, . \, Z_R = kT$.

## Claims

**1.** Apparatus for regenerating an optical signal in the form of a bit stream represented by solitons defined in particular by a propagation wavelength and a bit rate, said apparatus comprising a clock recovery circuit (C3, CLKX) for extracting a clock signal from said optical signal and an optical modulator (MOD) for regenerating said solitons, and being **characterized in that** it includes, upstream from the modulator, synchronization means (2) for synchronizing solitons emitted on $\underline{n}$ channels having respective different wavelengths, where n>1, said channels and said different wavelengths being associated with different group times, said synchronization means having $\underline{m}$ optical delay lines, where 1≤m<n, the delay $\tau_i$ for the line $\underline{i}$, where 1≤i≤m, being selected in such a manner as to compensate for the differences between the group times associated with the various channels.

**2.** Apparatus according to claim 1, **characterized in that** the synchronization means have $\underline{m}$ optical delay lines, where m<n, the delay $\tau_i$ for channel $\underline{i}$, where 1≤i≤m, being selected in such a manner as to compensate for the group time differences between $\underline{m}$ channels, and also have at least one line without optical delay for the n-m other channels.

**3.** Apparatus according to claim 2, **characterized in that** the synchronization means comprise a single line without optical delay (26; 32), said line without optical delay being designed to receive multiplexed solitons emitted over a plurality of channels.

**4.** Apparatus according to claim 1 or 2, **characterized in that** the synchronization means include an optical line (8) fitted with $\underline{m}$ photorefractive filters in series (FPR1, FPR2, ..., FPRm), the frequency of each filter being associated with the frequency of a respective channel, and the respective position of each filter $\underline{i}$, where 1≤i≤m, being selected so as to produce said delay $\tau_i$ for the solitons emitted on channel i; control means (6) for applying the solitons received by the synchronization means to said optical line and for applying the solitons reflected by the filters of said optical line to an outlet port of the synchronization means; and an optical coupler (20) for conveying the solitons emitted on the n-m channels which are not associated with a filter to the outlet port of the synchronization means.

**5.** Apparatus according to claim 4, **characterized in that** said control means (6) is a three-port optical circulator.

6. Apparatus according to claim 1 or 2, **characterized in that** the synchronization means comprises a demultiplexer (22), a set of $\underline{m}$ lines in parallel, each including a length of optical delay line, a multiplexer (24), and at least one line (26) without optical delay disposed between the demultiplexer and the multiplexer.

7. Apparatus according to claim 1 or 2, **characterized in that** the synchronization means comprise: a divider (28); a set of $\underline{m}$ lines in parallel each having a respective filter ($16_1$, ..., $16_m$) for selecting one channel, and a length of optical delay line; a concentrator (30); and at least one line (32) without optical delay between the divider (28) and the concentrator (30), said line without delay having a filter (34) for selecting at least one channel.

8. Apparatus according to any one of claims 1 to 7, **characterized in that** it includes a channel filter (Fck) at the output from the synchronous modulator (MOD).

9. An optical transmission system for conveying signals each of which is in the form of a bit stream represented by solitons, which solitons are defined in particular by a propagation wavelength and by a bit rate, said transmission system comprising at least an emitter (E) and a receiver (R) interconnected by an optical fiber (F), said system being **characterized in that** it includes at least one optical regenerator apparatus according to any one of claims 1 to 8.

10. A system according to claim 9, **characterized in that** each regenerator apparatus is disposed at a distance $Z_R$ from said emitter or from the preceding regenerator apparatus, where the distance $Z_R$ is selected in such a manner that its product with the arrival time difference $\delta\tau_g = \tau_g(\lambda_1) - \tau_g(\lambda_\ell)$ satisfies the following condition:

$$\left[ kT - \frac{T}{a} \right] < \delta\tau_g \ Z_R < \left[ kT + \frac{T}{a} \right]$$

where: $\underline{k}$ is an integer; $a \geq 4$; T is the bit time; $Z_R$ is in km; $\delta\tau_g$ is in ps.km$^{-1}$; and $\lambda_1$ and $\lambda_\ell$ are the end wavelengths of the spectrum band defined by said subset of n-m channels.

11. A system according to claim 10, **characterized by** a clock recovery circuit which extracts a signal of wavelength $\lambda_k$ from the optical signal, where $\lambda_k$ lies in the wavelength range $\lambda_1$ to $\lambda_\ell$, such that $\tau_g(\lambda_k).Z_R = kT$.

FIG. 1

FIG. 2

EP 0 897 624 B1

# FIG. 3

# FIG. 4

# FIG. 5

12